# EUROPÄISCHE PATENTSCHRIFT

(11) **EP 1 000 106 B1**
(45) Veröffentlichungstag und Bekanntmachung des Hinweises auf die Patenterteilung: **09.04.2003**
(21) Anmeldenummer: 98943751.2
(22) Anmeldetag: 21.07.1998
(51) Int. Cl.: C08G 64/06, G02B 1/04, G11B 7/00

(54) **COPOLYCARBONATE AUF BASIS VON INDANBISPHENOLEN**
COPOLYCARBONATES WITH AN IDANE BISPHENOL BASE
COPOLYCARBONATES A BASE D'INDANBISPHENOLS

(30) Priorität: 02.08.1997 DE 19733570
(43) Veröffentlichungstag der Anmeldung: 17.05.2000
(73) Patentinhaber: Bayer Aktiengesellschaft, 51368 Leverkusen (DE)
(72) Erfinder: WESTERNACHER, Stefan, Seabrook, TX 77586 (US); KÖNIG, Annett, D-47800 Krefeld (DE); STEBANI, Jürgen, D-47800 Krefeld (DE); BRUDER, Friedrich-Karl, D-47800 Krefeld (DE); HAESE, Wilfried, D-51519 Odenthal (DE)
(86) Internationale Anmeldenummer: EP9804541
(87) Internationale Veröffentlichungsnummer: WO99006464

(56) Entgegenhaltungen:
- EP-A- 0 013 904
- EP-A- 0 213 413
- EP-A- 0 321 831
- EP-A- 0 362 792
- FR-A- 2 347 395
- US-A- 5 703 197
- CHEMICAL ABSTRACTS, vol. 106, no. 20, 18. Mai 1987 Columbus, Ohio, US; abstract no. 166296, XP002083977 & JP 61 148401 A (MITSUI TOATSU CHEM.) 7. Juli 1986 in der Anmeldung erwähnt
- CHEMICAL ABSTRACTS, vol. 126, no. 13, 25. März 1997 Columbus, Ohio, US; abstract no. 179040, XP002083978 & JP 09 006022 A (MITSUBISHI GAS CHEM. CO.) 10. Januar 1997

## Beschreibung

Die vorliegende Erfindung betrifft neue Copolycarbonate mit einer Glasumwandlungstemperatur T_{G} von ≤160°C und einer rheooptischen Konstante C_{R} ≤|4| *GPa⁻¹ enthaltend als wiederkehrende, bifunktionelle Carbonatstruktureinheiten
A) wenigstens eine der Carbonatstruktureinheiten der Formel (I) 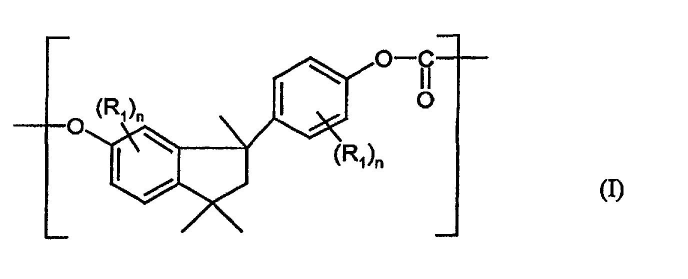 worin
   - R₁: unabhängig voneinander, jeweils für einen C₁-C₁₂-Alkylrest, vorzugsweise C₁-C₃-Alkylrest, besonders bevorzugt einen Methylrest, ein Halogen, vorzugsweise Chlor oder Brom und
   - n: für 0 steht,
   und
B) wenigstens eine der von A unterschiedlichen, weiteren Carbonatstruktureinheiten der Formel (II) 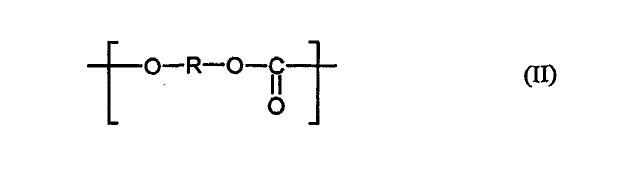
worin der Rest -O-R-O- für beliebige Diphenolat-Reste steht,
in denen -R- ein aromatischer Rest mit 6 bis 40 C-Atomen ist, der einen oder mehrere aromatische oder kondensierte, gegebenenfalls Heteroatome enthaltende aromatische Kerne enthalten und gegebenenfalls mit C₁-C₁₂-Alkylresten oder Halogen substituiert sein und aliphatische Reste, cycloaliphatische Reste, aromatische Kerne oder Heteroatome als Brückenglieder enthalten kann, und
die als jeweilige Homopolycarbonate aus Carbonatstruktureinheiten der Formel (II) eine Glasumwandlungstemperatur T_{G} von ≤160°C und eine rheooptische Konstante C_{R} ≤|4| * GPa⁻¹ aufweisen.

Ferner betrifft die vorliegende Erfindung die Verwendung dieser Copolycarbonate zur Herstellung von optischen Artikeln.

Für die Speicherung von optischen Informationen auf optischen gegebenenfalls mehrfach lesbaren und wiederbeschreibbaren Datenträgern oder Compact-Disks müssen solche Massenspeicher nicht nur eine ausreichende Durchlässigkeit des Lichtes in dem entsprechenden Wellenbereich und eine ausgezeichnete optische Homogenität, d.h. eine möglichst niedrige Doppelbrechung haben, sondern auch eine gute mechanische Belastbarkeit aufweisen.

Aus der japanischen Offenlegungsschrift Nr. Sho 61-148 401 sind Polycarbonate auf Basis von Indanbisphenol bekannt, die gegebenenfalls bis zu 95 Mol-% weiterer aromatischer bifunktioneller Carbonatstruktureinheiten enthalten können. Optische Artikel aus ganz speziell aufgebauten Copolycarbonaten weisen gegenüber optischen Artikeln aus z.B. Acrylatharzen eine niedrigere Doppelbrechung, geringere Feuchtigkeitsabsorption und eine bessere Wärmebeständigkeit auf. Den gesteigerten Anforderungen, insbesondere an die Doppelbrechung, Verarbeitbarkeit und Transmission genügen diese bekannten Copolycarbonate nicht.

EP-A 0 321 831 offenbart Polycarbonate, enthaltend bestimmte Indanbisphenole, deren Blends mit Polystyrolen und die Verwendung dieser Blends für optische Speicher. Die in EP-A 0 321 831 offenbarten Polycarbonate unterscheiden sich nur durch die Substitution am Indanbisphenol von den vorliegend beanspruchten, mit unsubstituiertem Indanbisphenol hergestellten Polycarbonaten. Es wird jedoch nichts über die Eignung von indanbisphenolhaltigen Polycarbonaten allein, ohne Blendbildung, für die Verwendung in optischen Datenspeichern gesagt.

Es war daher Aufgabe der vorliegenden Erfindung, Copolycarbonate zur Verfügung zu stellen, die den hohen Anforderungen an moderne optische Datenträger, insbesondere optische Massenspeicher, genügen.

Erfindungsgemäß gelingt dies durch Bereitstellung von Copolycarbonaten mit einer Glasumwandlungstemperatur T_{G} von ≤160° und einer rheooptischen Konstante C_{R} ≤ |4|*GPa⁻¹ enthaltend als wiederkehrende, bifunktionelle Carbonatstruktureinheiten
A) wenigstens eine der Carbonatstruktureinheiten der Formel (I) 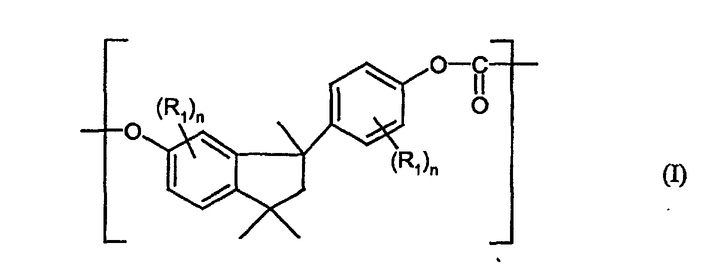 worin
   die Reste R₁ und n die vorstehend angegebene Bedeutung haben
   und
B) wenigstens eine der von A unterschiedlichen, weiteren, bifunktionellen Carbonatstruktureinheiten der Formel (II) 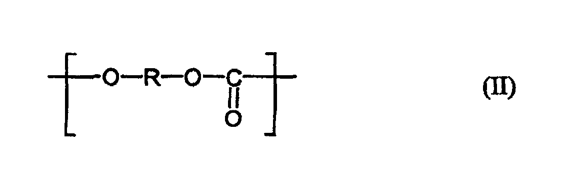 worin der Rest -O-R-O- für beliebige Diphenolat-Reste steht,
   von denen -R- ein aromatischer Rest mit 6 bis 40 C-Atomen ist, der einen oder mehrere aromatische oder kondensierte, gegebenenfalls Heteroatome enthaltende aromatische Kerne enthalten und gegebenenfalls mit C₁-C₁₂-Alkylresten oder Halogen substituiert sein und aliphatische Reste, cycloaliphatische Reste, aromatische Kerne oder Heteroatome als Brückenglieder enthalten kann,
   und
   die als jeweilige Homopolycarbonate aus Carbonatstruktureinheiten der Formel (II) eine Glasumwandlungstemperatur T_{G} von ≤160°C, vorzugsweise ≤130°C, und eine rheooptische Konstante C_{R}≤|4|* GPa⁻¹, vorzugsweise ≤ |3|* GPa⁻¹ aufweisen.

Bevorzugte erfindungsgemäße Copolycarbonate sind solche, die 5 bis 50 Mol-%, vorzugsweise 10 bis 40 Mol-%, besonders bevorzugt 20 bis 30 Mol-%, bezogen auf 100 Mol-% der bifunktionellen Carbonatstruktureinheiten A und B, bifunktionelle Carbonatstruktureinheiten B aufweisen.

Die bifunktionellen Garbonatstrukreinheiten der Formel (I) leiten sich von Indanbisphenolen ab, deren Herstellung literaturbekannt ist. So wurde Indanbisphenol bisher aus Isopropenylphenol oder dessen Dimeren in Gegenwart eines Friedel-Craft-Katalysators, wie z.B. Bortrifluorid, Eisen(III)chlorid, Aluminiumoxid, Aluminiumtrichlorid, Halogencarbonsäuren oder Carbonsäuren in organischen Lösungsmitteln hergestellt (US-A 3 288 864, JP-A 60035150, US-A 4 334 106). Indanbisphenole mit hoher Reinheit eignen sich insbesondere zur Herstellung der erfindungsgemäßen Copolycarbonate.

Die bifunktionellen Carbonatstruktureinheiten B leiten sich von Diphenolverbindungen ab, die zu Homopolycarbonaten führen, die eine rheooptische Konstante C_{R} ≤ |4|* GPa⁻¹, vorzugsweise ≤ |3| * GPa⁻¹, besonders bevorzugt ≤|2| * GPa⁻¹, bestimmt wie nachfolgend angegeben, aufweisen.

Diese entsprechenden Homopolycarbonate zeichnen sich außerdem durch eine Glasumwandlungstemperatur T_{G} von ≤160°C vorzugsweise ≤130°C gemessen nach der Norm CEI/IEC 1074 aus.

Bevorzugt leiten sich die bifunktionellen Carbonatstruktureinheiten B von aromatischen Diphenolen wie 4,4'-(m-Phenylendiisopropyliden)-diphenol (Bisphenol-M) ab.

Zur Herstellung der bifunktionellen Carbonatstruktureinheiten B können auch Mischungen der Diphenole eingesetzt werden.

Die Herstellung der erfindungsgemäßen Copolycarbonate kann z.B. nach den bekannten drei Methoden erfolgen (vgl. H. Schnell, "Chemistry and Physics of Polycarbonats", Polymerreview, Volume IX, Seite 27 ff., Interscience Publishers, New York 1964, sowie die DE-A 1 495 626, DE-A 2 232 877, DE-A 2 703 376, DE-A 2 714 544, DE-A 3 000 610, DE-A 3 832 396):
1. Nach dem Lösungsverfahren in disperser Phase, sogenanntes "Zweiphasengrenzflächenverfahren":
   Hierbei werden die einzusetzenden Diphenole in wäßriger alkalischer Phase gelöst. Dazu werden gegebenenfalls die zur Herstellung der erfindungsgemäßen Co-Polycarbonate erforderlichen Kettenabbrecher in Mengen von 1,0 bis 20,0 Mol-%, bezogen auf Mole Diphenol, in einer wäßrigen alkalischen Phase, vorzugsweise Natronlauge, gelöst, oder zu dieser in einer inerten organischen Phase, in Substanz zugegeben. Dann wird in Gegenwart einer inerten, vorzugsweise polycarbonatlösenden, organischen Phase mit Phosgen umgesetzt. Die Reaktionstemperatur liegt zwischen 0°C und 50°C.
   Die Zugabe der erforderlichen Kettenabbrecher und Verzweiger kann auch während der Phosgenierung oder solange Chlorkohlensäureester in dem Synthesegemisch vorhanden sind, in Substanz, als Schmelze, als Lösung in Alkali oder inerten organischen Lösungsmitteln, erfolgen. Die Reaktion kann durch Katalysatoren wie tertiäre Amine oder Oniumsalze beschleunigt werden. Bevorzugt sind Tributylamin, Triethylamin und N-Ethylpiperidin.
   Neben oder anstelle der Diphenole können auch deren Chlorkohlensäureester und/oder Bischlorkohlensäureester eingesetzt oder während der Synthese zudosiert werden.
   Geeignete Lösungsmittel sind beispielsweise Methylenchlorid, Chlorbenzol, Toluol und deren Mischungen.
2. Nach dem Lösungsverfahren in homogener Phase, auch "Pyridinverfahren" genannt:
   Hierbei werden die Diphenole in organischen Basen wie Pyridin gelöst, gegebenenfalls unter Zusatz weiterer organischer Lösemittel, dann werden, wie unter 1., beschrieben, gegebenenfalls die zur Herstellung der erfindungsgemäßen Polycarbonate erforderlichen Kettenabbrecher und Verzweiger zugesetzt.
   Anschließend wird mit Phosgen umgesetzt. Die Reaktionstemperatur liegt bevorzugt zwischen 10°C und 50°C. Geeignete organische Basen außer Pyridin sind z.B. Triethylamin, Tributylamin, N-Ethylpiperidin, sowie N,N-dialkylsubstituierte Aniline, wie N,N-Dimethylanilin. Geeignete Lösungsmittel sind beispielsweise Methylenchlorid, Chlorbenzol, Toluol, Tetrahydrofuran, 1,3-Dioxolan und deren Mischungen.
   Neben den Diphenolen können auch bis zu 50 Mol-%, bezogen auf die eingesetzten Phenole, von deren Bischlorkohlensäureestern eingesetzt werden.
   Die Isolierung der erfindungsgemäßen Polycarbonate erfolgt bei den Verfahren 1 und 2 in bekannter Weise. Geeignete Aufarbeitungsverfahren sind insbesondere das Ausfällen, die Sprühtrocknung und das Verdampfen des Lösungsmittels in Vakuum.
3. Nach dem Schmelzumesterungsverfahren
   In dem Schmelzumesterungsverfahren wird unter Zugabe von Diphenylcarbonat in stöchiometrischen Mengen oder im Überschuß von bis zu 40 %, unter stetiger destillativer Entfernung von Phenol und gegebenenfalls des Diphenylcarbonatüberschusses das Molekulargewicht aufkondensiert. Dieses Verfahren wird unter Verwendung üblicher Katalysatoren wie Alkalimetallionen, z.B. Li, Na, K, Übergangsmetallverbindungen, z.B. solchen auf Basis Sn, Zn, Ti oder Stickstoff- und Phosphor-Basen, bevorzugt Ammonium- und Phosphonium-Salzen, vorzugsweise Phosphoniumhalogeniden oder Phenolaten als einstufiges oder zweistufiges Verfahren, also mit einer eventuellen getrennten Aufkondensation der Oligomeren und des Polymeren, durchgeführt.

In bekannter Weise können dabei Kettenabbrecher und/oder Verzweiger für die Herstellung der erfindungsgemäßen Copolycarbonate mitverwendet werden. Die entsprechenden Kettenabbrecher und/oder Verzweiger sind unter anderem aus der EP-A 335 214 und DE-A 3 007 934 bzw. EP-A 411 433 und DE-A 4 335 440 bekannt.

Die erfindungsgemäßen Copolycarbonate weisen eine Glasumwandlungstemperatur T_{G} von ≤160°C, vorzugsweise ≤150°C, besonders bevorzugt ≤130°C, und eine rheooptische Konstante C_{R} ≤|4| * GPa⁻¹, vorzugsweise ≤|3|* GPa⁻¹, besonders bevorzugt ≤ |2| * GPa⁻¹, auf.

Die erfindungsgemäßen thermoplastischen Copolycarbonate weisen Molekulargewichte M_{w} (Gewichtsmittel ermittelt durch Gelchromatographie nach vorheriger Eichung) von wenigstens 9000, vorzugsweise zwischen 9000 und 30000, besonders bevorzugt zwischen 10000 und 20000, auf.

Aufgrund ihrer niedrigen rheooptischen Konstante, aber auch ihres sehr niedrigen Yellowness-Index Y₁≤2 - wodurch eine Transmission auf hohem Niveau gegeben ist- und ihrer sehr guten Verarbeitungseigenschaften eignen sich die erfindungsgemäßen Copolycarbonate insbesondere zur Herstellung optischer Artikel, wie Linsen, Prismen, optischer Datenträger, Compact-Disks, insbesondere aber zur Herstellung mehrfach lesbarer und wiederbeschreibbarer, optischer Datenträger für die Speicherung von optischen Informationen (Massenspeicher).

Der Yellowness-Index wird mit einem 4 mm dicken Spritzgußplättchen gemäß der Norm ASTM E 313/96 gemessen.

Insbesondere dafür müssen die erfindungsgemäßen Copolycarbonate einen hohen Reinheitsgrad aufweisen. Dies gelingt indem man bei deren Aufarbeitung und Isolierung in bekannter Weise den Restmonomeren-, Lösungsmittel-, Fremdpartikel-(anorganischer oder organischer Art, insbesondere Salze und Staub) und Chlorgehalt auf geringstmögliche Werte reduziert, entsprechend z.B. der Lehre der EP-A 380 002.

Ein weiterer Gegenstand der vorliegenden Erfindung ist daher die Verwendung der erfindungsgemäßen Copolycarbonate bzw. der entsprechenden Formmassen zur Herstellung optischer Artikel bzw. die entsprechenden optischen Artikel hergestellt aus den erfindungsgemäßen Copolycarbonaten.

Dafür können den erfindungsgemäßen Copolycarbonaten bzw. den entsprechenden Formmassen, soweit dies für die erfindungsgemäßen Einsatzzwecke zulässig ist, vor, während und nach ihrer Verarbeitung, die für thermoplastische Polycarbonate üblichen Additive wie Stabilisatoren, optische Aufheller, Flammschutzmittel, Entformungsmittel, Fließhilfsmittel in üblichen Mengen zugesetzt werden, wie sie beispielsweise in der EP-A 213 413 beschrieben sind.

Die Herstellung der erfindungsgemäßen Formkörper kann nach den üblichen Methoden, insbesondere Spritzgießen oder Extrudieren, erfolgen.

### Beispiele

In den nachfolgenden Beispielen und Vergleichsbeispielen werden die rheooptische Konstante, das Molekulargewicht und die Glasumwandlungstemperatur wie folgt bestimmt:

Doppelbrechung in Spritzgußkörpern, eine der wichtigsten optischen Eigenschaften, läßt sich als Materialeigenschaft durch die rheooptische Konstante beschreiben. Diese kann positiv oder negativ sein. Je größer ihr absoluter Wert ist, um so größer ist die Doppelbrechung in spritzgegossenen Formteilen. Das Meßverfahren der rheooptischen Konstante ist bekannt (EP-A-0 621 297, Seite 4, Zeile 36 bis 45). Die dazu benötigten planparallelen 150 bis 1000-Mikrometer dicken -Probekörper können durch Schmelzpressen oder Filmgießen hergestellt werden.

Die **Molekulargewichtsbestimmung** erfolgt durch Messung der relativen Viskositäten bei 25°C in Methylenchlorid und einer Konzentration von 0,5 g pro 100 ml Methylenchlorid.

Die **T**_{**G**}**-Bestimmung** wurde entsprechend der Norm CEI/IEC 1074 vorgenommen.

### Beispiele und Vergleichsbeispiele

Folgende Poly(co)carbonate wurden hergestellt:

**Tabelle 1**

| Beispiel | Bisphenol A (g) | Indanbisphenol (g) | Bisphenol M (g) |
|---|---|---|---|
| 1 | 0 | 43,8 | 26,0 |
| Vergleich 2 | 0 | 0 | 43,3 |
| Vergleich 3 | 57,1 | 0 | 0 |

Entsprechend den Mengenangaben in Tabelle 1 werden Bisphenol A, Bisphenol M bzw. Indanbisphenol und Bisphenol M mit 22,0 g NaOH und 800 g Wasser unter Inertgas unter Rühren gelöst. Anschließend fügt man 600 ml Methylenchlorid hinzu.

In die gut gerührte Lösung wurden bei 20 bis 25°C 49,5 g Phosgen mit einer Rate von ungefähr 2 g/min eingeleitet, wobei der pH-Wert durch Nachdosieren einer 45 %igen wäßrigen Natronlaugelösung bei 11 bis 14 gehalten wurde. Anschließend wurde eine solche Menge p-tert.-Butylphenol (ca. 2 g) zugegeben, daß eine Lösungsviskosität im Endprodukt von ca. 1,2 erreicht wurde. Ferner wurden weiterhin 0,35 ml N-Ethylpiperidin zugegeben und noch 45 Minuten weiter gerührt. Die bisphenolatfreie Lösung wurde abgetrennt, die organische Phase nach Ansäuern mit Wasser neutral gewaschen und vom Lösungsmittel befreit.

Die erhaltenen Polycarbonate wiesen folgende in Tabelle 2 angegebene Eigenschaften auf:

**Tabelle 2**

| Beispiel | Glastemperatur (°C) | rheooptische Konstante (1/GPa) | relative Lösungsviskosität |
|---|---|---|---|
| 1 | 147 | 2,2 | 1,209 |
| Vergleich 2 | 100 | 3,2 | 1,202 |
| Vergleich 3 | 145 | 5,4 | 1,208 |

## Patentansprüche

1. Copolycarbonate mit einer Glasumwandlungstemperatur T_{G} von ≤160°C und einer rheooptischen Konstante C_{R}≤|4|*GPa⁻¹ enthaltend als wiederkehrende, bifunktionelle Carbonatstruktureinheiten
A) wenigstens eine der Carbonatstruktureinheiten der Formel (I) 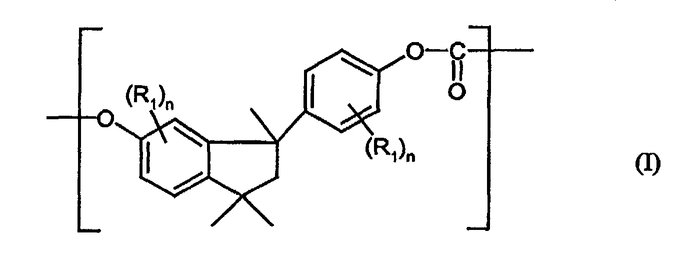 worin
R₁ unabhängig voneinander, jeweils für einen C₁-C₁₂-Alkylrest oder ein Halogen und
n für 0 steht,
und
B) wenigstens eine der von A unterschiedlichen, weiteren Carbonatstruktureinheiten der Formel (II) 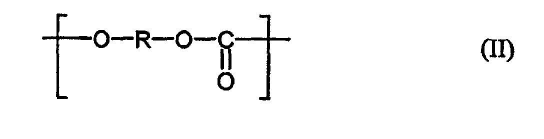
worin der Rest -O-R-O- für beliebige Diphenolat-Reste steht,
in denen -R- ein aromatischer Rest mit 6 bis 40 C-Atomen ist, der einen oder mehrere aromatische oder kondensierte, gegebenenfalls Heteroatome enthaltende aromatische Kerne enthalten und gegebenenfalls mit C₁-C₁₂-Alkylresten oder Halogen substituiert sein und aliphatische Reste, cycloaliphatische Reste, aromatische Kerne oder Heteroatome als Brückenglieder enthalten kann,
und die als jeweilige Homopolycarbonate aus Carbonatstruktureinheiten Formel (II) eine Glasumwandlungstemperatur T_{G} von ≤160°C und eine rheooptische Konstante C_{R}≤|4|*GPa⁻¹ aufweisen.

2. Copolycarbonate nach Anspruch 1, **dadurch gekennzeichnet, daß** die jeweiligen Homopolycarbonate eine Glasumwandlungstemperatur T_{G} von ≤130° und eine rheooptische Konstante C_{R} ≤|3|*GPa⁻¹ aufweisen.

3. Copolycarbonate nach einem der Ansprüche 1 bis 2, mit einer Glasumwandlungstemperatur T_{G} von ≤150°C und einer rheooptischen Konstante C_{R}≤|3|*GPa⁻¹.

4. Copolycarbonate nach einem der Ansprüche 1 bis 3, **dadurch gekennzeichnet, daß** sich die bifunktionellen Carbonatstruktureinheiten der Formel (II) von 4,4'-(m-Phenylendiisopropyliden)-diphenol (Bisphenol-M) ableiten.

5. Copolycarbonate nach einem der Ansprüche 1 bis 4, **dadurch gekennzeichnet, daß** sie aus 5 bis 50 Mol-% der bifunktionellen Carbonatstruktureinheiten (B) aufgebaut sind.

6. Copolycarbonate nach einem der Ansprüche 1 bis 5 mit einem mittleren Molekulargewicht M_{w} zwischen 9000 und 30000.

7. Formmassen aus Copolycarbonaten nach einem der Ansprüche 1 bis 6 und gegebenenfalls Hilfs- und Zusatzstoffen.

8. Formmassen nach Anspruch 7 mit einem Yellowness-Index Y₁<2.

9. Verwendung der Formmassen nach Anspruch 7 zur Herstellung von Linsen und optischen Massenspeichern.

10. Optische Artikel aus Formmassen nach Anspruch 7 oder 8.

## Claims

1. Copolycarbonates having a glass transition temperature T_{G} of ≤160°C and a rheooptic constant C_{R}≤|4|*GPa⁻¹, containing as repeating, difunctional carbonate structural units
A) at least one of the carbonate structural units of formula (I) 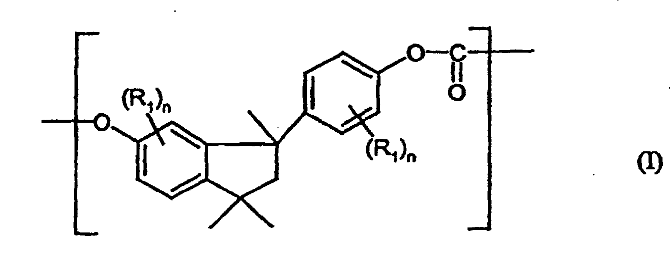 wherein
the radicals R₁ each independently of the other(s) represents a C₁-C₁₂-alkyl radical or a halogen atom, and
n represents 0,
and
B) at least one of the other carbonate structural units, which are different from A, of formula (II) 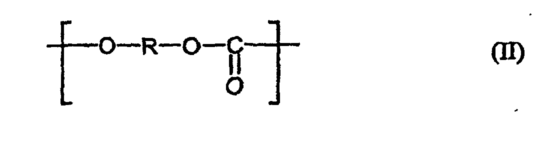
wherein the radical -O-R-O- represents any desired diphenolate radicals,
in which -R- is an aromatic radical having from 6 to 40 carbon atoms which may contain one or more aromatic or condensed aromatic nuclei optionally containing hetero atoms and which may optionally be substituted by C₁-C₁₂-alkyl radicals or by halogen and which may contain aliphatic radicals, cycloaliphatic radicals, aromatic nuclei or hetero atoms as bridge members,
and which, as respective homopolycarbonates from carbonate structural units of formula (II), have a glass transition temperature T_{G} of ≤160°C and a rheooptic constant C_{R}≤|4|*GPa⁻¹.

2. Copolycarbonates according to claim 1, **characterised in that** the respective homopolycarbonates have a glass transition temperature T_{G} of ≤130° and a rheooptic constant C_{R}≤|3|*GPa⁻¹.

3. Copolycarbonates according to claim 1 or 2, having a glass transition temperature T_{G} of ≤150° and a rheooptic constant C_{R}≤|3|*GPa⁻¹.

4. Copolycarbonates according to any one of claims 1 to 3, **characterised in that** the difunctional carbonate structural units of formula (II) are derived from 4,4'-(m-phenylenediisopropylidene)-diphenol (bisphenol M).

5. Copolycarbonates according to any one of claims 1 to 4, **characterised in that** they are composed of from 5 to 50 mol% of the difunctional carbonate structural units (B).

6. Copolycarbonates according to any one of claims 1 to 5 having an average molecular weight M_{w} from 9000 to 30,000.

7. Moulding compositions consisting of copolycarbonates according to any one of claims 1 to 6 and, optionally, auxiliary substances and additives.

8. Moulding compositions according to claim 7 having a yellowness index Y₁<2.

9. Use of the moulding compositions according to claim 7 in the production of lenses and optical mass storage means.

10. Optical articles made from moulding compositions according to claim 7 or 8.

## Revendications

1. Copolycarbonates ayant une température de transition vitreuse T_{G} ≤ 160°C et une constante rhés-optique C_{R} ≤ |4|*GPa⁻¹ contenant comme unités structurales de carbonate bifonctionnelles récurrentes
A) au moins l'une des unités structurales de carbonate de formule (I) 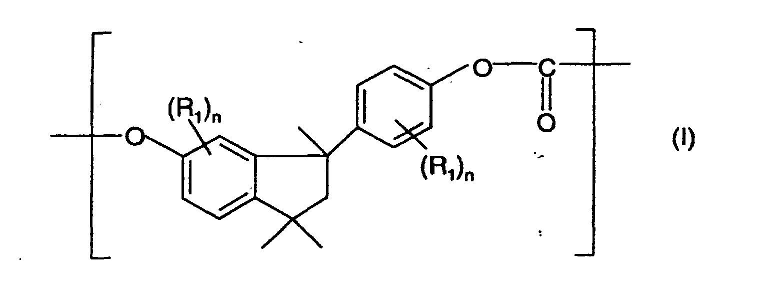 où
les R₁ représentent indépendamment les uns des autres chacun un reste alkyle en C₁-C₁₂ ou un halogène et
n représente 0,
et
B) au moins l'une des unités structurales de carbonate supplémentaires, différentes de A, de formule (II) 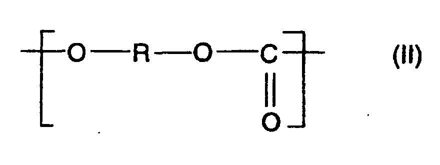
où le reste -O-R-O- représente des restes diphénolates quelconques,
où -R- est un reste aromatique à 6 à 40 atomes C, qui peut contenir un ou plusieurs noyaux aromatiques ou aromatiques condensés, contenant éventuellement des hétéroatomes et qui peut éventuellement être substitué par des restes alkyles en C₁-C₁₂ ou halogène et qui peut contenir des restes aliphatiques, des restes cycloaliphatiques, des noyaux aromatiques ou des hétéroatomes comme membres de ponts,
et qui, en tant qu'homopolycarbonates d'unités structurales de carbonate de formule (II), présentent une température de transition vitreuse T_{G} ≤ 160°C et une constante rhéo-optique C_{R} ≤ |4|*GPa⁻¹.

2. Copolycarbonates selon la revendication 1 **caractérisés en ce que** les différents homopolycarbonates présentent une température de transition vitreuse T_{G} ≤ 130°C et une constante rhéo-optique C_{R} ≤ |3|*GPa⁻¹.

3. Copolycarbonates selon l'une des revendications 1 à 2 ayant une température de transition vitreuse T_{G} ≤ 150°C et une constante rhéo-optique C_{R} ≤ |3|*GPa⁻¹.

4. Copolycarbonates selon l'une des revendications 1 à 3 **caractérisés en ce que** les unités structurales de carbonate bifonctionnelles de formule (II) dérivent du 4,4'-(m-phénylènediisopropylidène)-diphénol (bisphénol M).

5. Copolycarbonates selon l'une des revendications 1 à 4 **caractérisés en ce qu'**ils sont constitués à partir de 5 à 50 mol% des unités structurales de carbonate bifonctionnelles (B).

6. Copolycarbonates selon l'une des revendications 1 à 5 ayant une masse moléculaire moyenne Mₚ entre 9 000 et 30 000.

7. Masses à mouler constituées par des copplycarbonates selon l'une des revendications 1 à 6 et éventuellement des adjuvants et des additfs.

8. Masses à mouler selon la revendication 7 ayant un indice de Yellowness Y₁ < 2.

9. Utilisation des masses à mouler selon la revendication 7 pour la production de lentilles et de mémoires de fond optiques.

10. Articles optiques constitués par des masses à mouler selon la revendication 7 ou 8.
